# EUROPEAN PATENT SPECIFICATION

(11) **EP 0 288 074 B1**
(45) Date of publication and mention of the grant of the patent: **15.11.1995**
(21) Application number: 88106491.9
(22) Date of filing: 22.04.1988
(51) Int. Cl.: H04N 1/12

(54) **Optical system for flying spot scanning apparatus**
Optisches System für ein Lichtpunktabtastgerät
Système optique pour un appareil d'analyse à spot mobile

(30) Priority: 24.04.1987 JP 102836/87
(43) Date of publication of application: 26.10.1988
(73) Proprietor: Dainippon Screen Mfg. Co., Ltd., Kamikyo-ku Kyoto 602 (JP)
(72) Inventor: Wakimoto, Zenji c/o Dainippon Screen Mfg. Co, Ltd., Horikawa-dori Kamikyo-ku, Kyoto, 602 (JP); Nagata, Shinichi c/o Dainippon Screen Mfg. Co, Ltd, Horikawa-dori Kamikyo-ku, Kyoto, 602 (JP); Katsuyama, Mikizo c/o Dainippon Screen Mfg. Co, Lt, Horikawa-dori Kamikyo-ku, Kyoto, 602 (JP)
(74) Representative: Goddar, Heinz J., Dr.

(56) References cited:
- EP-A- 0 093 583
- US-A- 4 201 455
- US-A- 4 279 472
- FUJITSU-SCIENTIFIC AND TECHNICAL JOURNAL. vol. 14, no. 3, September 1978, KAWASAKI JP pages 91 - 106; Abe and Matsuda: "The correction method of beam scanning distortion using the parabolic mirror"

## Description

### BACKGROUND OF THE INVENTION

The present invention relates generally to an improvement of an apparatus for recording an image on a recording medium, and particularly to an optical system for use in a so-called flying spot scanning system (hereinafter referred to as "flying spot scanner").

There have been several proposals for improvement of the flying spot scanner. One of them is shown in the United States Patent US-A-4,034,408, wherein a laser beam emitted from a light source is modulated by an optical modulator in response to image signals, which is then deflected by a multifaced rotating polygon and is condensed by an **f**-theta lens which is provided immediately after the polygon, whereby a recording spot of the laser beam scans a recording medium which is fed in a direction perpendicular to the direction in which the recording spot runs, to record a desired image on the recording medium.

Another proposal is shown in a publication "KOGAKU" (Japanese Journal of Optics) Vol. 6, No. 2, pp. 67-74, entitled "The Correcting Method of Beam Scanning Distortion Using the Parabolic Mirror". In order to correct a distortion on a recording plane, a laser beam emitted from a light source is first expanded by a beam expander, which is then deflected by a galvanometer mirror and is in turn reflected by a parabolic mirror which is directed toward a recording medium, whereby the recording spot of the laser beam scans the recording medium, to record a desired image thereon.

Recently it has been demanded to record a desired image onto a recording medium of relatively large size, e.g. of approximately 500 mm to 1000 mm in an effective recording width, with high resolution, which requires the diameter of the recording spot to be fine, e.g. up to approximately 3 µm to 10 µm at half-width power thereof. However, conventional apparatuses cannot meet such demands satisfactorily. The reasons are discussed hereinbelow.

Generally, the more the recording medium becomes large in size, the more undesirable abberations caused will become also large. The diameter of a recording spot Wₒ can be expressed by:${\text{W}}_{\text{o}} \text{=} \text{k} \text{·λ·} \text{F}$
where **k** is a constant, λ is a wave length and **F** is an F-number.

In an apparatus shown in the United States Patent US-A-4,034,408, when the diameter of the recording spot **W**_{**o**} is intended to reduced, e.g. up to approximately 3 µm to 10 µm, an **f**-theta lens having a small F-number has to be prepared, as long as both **k** and λ are kept constant. It will be impractical, though not impossible in a theoretical sense, to obtain such an **f**-theta lens as meeting the conditions required. It may, of course, be possible to correct the abberations by using only a paraxial region of the **f**-theta lens, but, in this case the apparatus as a whole will become undesirably large in size because it makes the optical path considerably long, which is apparently disadvantageous.

Furthermore, should an **f**-theta lens be available as can enable a recording spot to be reduced up to approximately 3 µm to 10 µm, it will be required to prepare a specific polygon having a large reflecting surfaces enough to scan a whole recording width of a recording medium. Such multi-faced rotating polygon will have a diameter of 500 mm and have to be controlled so as to ensure the recording spot to scan a recording medium at a predetermined rotation rate, which will apparently be impracticable and costly.

In the case of an apparatus shown in the publication "KOGAKU", abberations, particularly coma and astigmatism, cannot be corrected by means of a parabolic mirror. Accordingly, the diameter of the recording spot cannot be reduced up to approximately 3 µm to 10 µm.

### SUMMARY OF THE INVENTION

In view of the foregoing, it is a principal object of the present invention to provide an improved optical system particularly useful for a so-called flying spot scanning apparatus.

It is another object to provide an optical system which ensures recording on a relatively large size recording medium, e.g. of 500 mm to 1000 mm in width, with a fine recording spot, e.g. approximately of 3 µm to 10 µm in half-width thereof.

It is a further object to provide an optical system which can make a flying spot scanning apparatus compact as a whole.

It is a further object to provide an optical system which can correct undesirable abberations.

The aforementioned objects are accomplished by the present invention as defined by the appended claims.

The present invention has the following useful advantages:

A recording spot focused on a recording medium can be extensively reduced up to 3 µm to 10 µm, whereby resolution power can be increased, while the effective scanning length can be made to be long to the extent of 500 mm to 1000 mm.

Curvature of field can be effectively reduced, by which a substantially flat image plane can be produced.

A deflection mirror can be efficiently minimized, whereby the scanning speed can be sufficiently increased.

Undesirable abberations, particularly coma and astigmatism, can be efficiently corrected, whereby a fine recording spot can be produced.

Furthermore, the flying spot scanning apparatus can be made compact as a whole.

Other novel features and advantages of the present invention will become apparent in the course of the following detailed description taken together with the accompanying drawings, which are directed only to the understanding of the present invention and not to the restriction of the scope of the invention.

### BRIEF DESCRIPTION OF THE DRAWINGS

Figure 1 is a schematic perspective view of a flying spot scanning apparatus according to a first embodiment embodying the present invention;
Figure 2 is a schematic partial side view of Figure 1;
Figure 3 is a schematic partial plane view of Figure 1;
Figure 4 is a side view of Figure 3;
Figures 5-(A) to 5-(C) are respectively a spot diagram according to the first embodiment of the present invention;
Figure 6 is a schematic partial plane view of a second embodiment embodying the present invention;
Figures 7-(A) to 7-(C) are respectively a spot diagram according to the second embodiment of the present invention;
Figure 8 is a schematic partial plane view of a third embodiment embodying the present invention;
Figure 9 is a side view of Figure 8;
Figures 10-(A) to 10-(C) are respectively a spot diagram according to the third embodiment of the present invention;
Figure 11 is a schematic partial plane view of a fourth embodiment embodying the present invention;
Figure 12 is a side view of Figure 11;
Figures 13-(A) to 13-(C) are respectively a spot diagram according to the fourth embodiment of the invention;
Figure 14 is a perspective view of a part of the flying spot scanning system;
Figures 15-(A) to 15-(C) are respectively a spot diagram according to a fifth embodiment of the invention; and
Figure 16 is a side view of a part of the optical system according to a sixth embodiment.

### DETAILED DESCRIPTION OF PREFERRED EMBODIMENTS

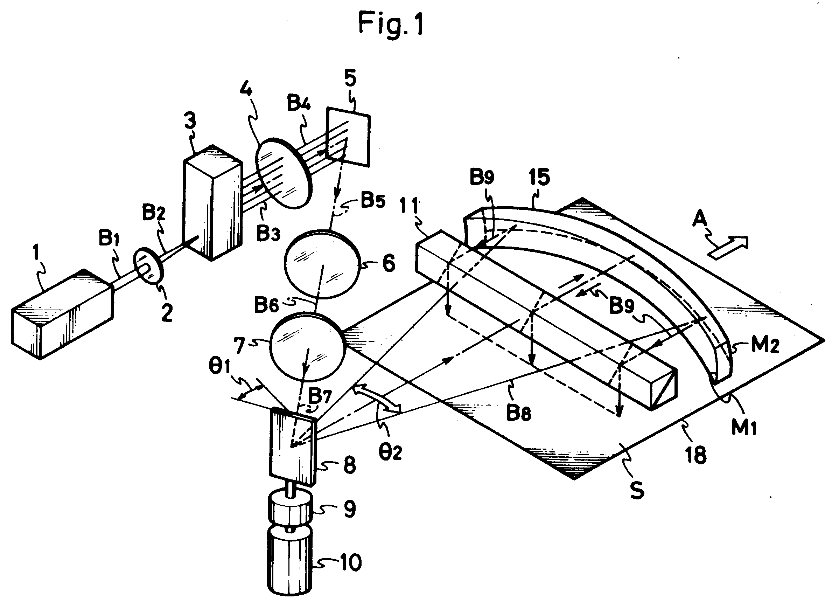

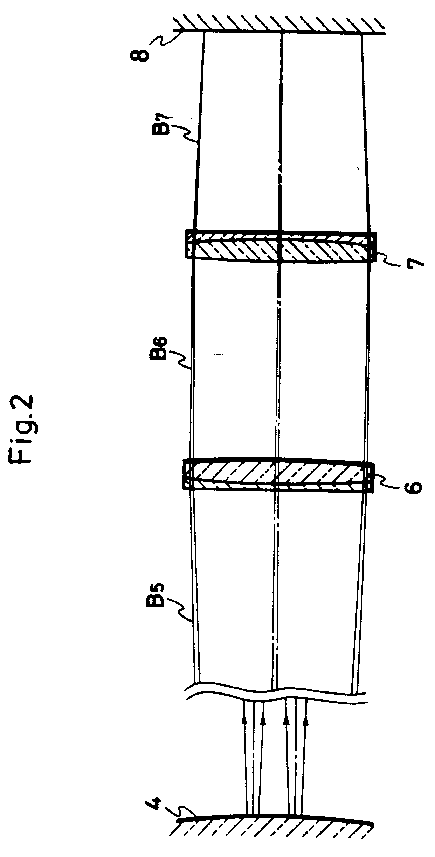

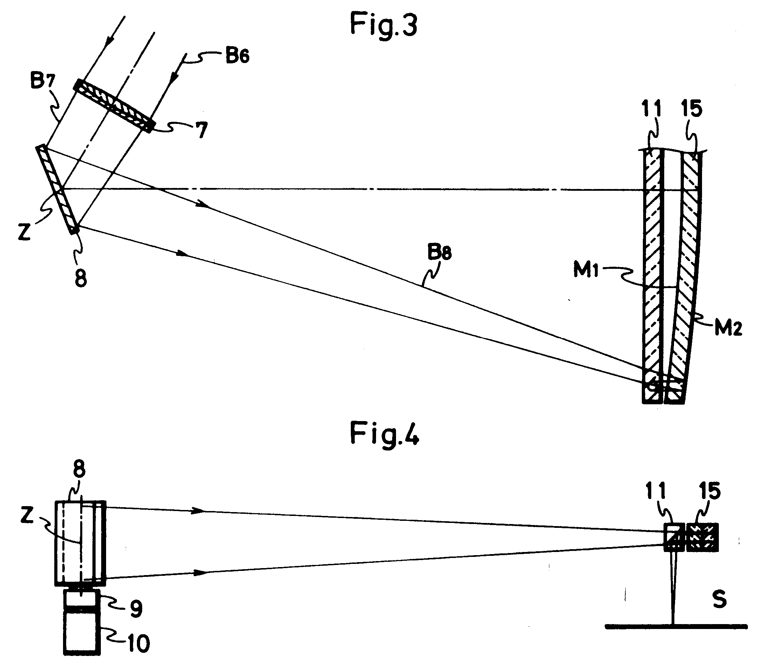

Referring to Figures 1 to 4, a laser beam **B₁** emitted from a light source 1 first passes through a condenser lens 2, by which the laser beam **B₁** is condensed and a beam **B₂** emerges therefrom. The beam **B₂** then enters an opto-electronic integrated circuit (hereinafter referred to as OEIC) 3, in which the beam is divided into twenty-one beams, which are in turn individually modulated thereby, to emerge therefrom. These beams **B₃** are transmitted through a field lens 4 to impinge upon a folding mirror 5. In Figure 1 the laser beams impinging upon the folding mirror 5 are denoted by **B₄**, and those reflected thereby are denoted by **B₅**. The laser beams **B₅** then pass through a collimater lens 6, by which the beams are corrected to be well-collimated beams **B₆**. These beams **B₆** are received by a focusing lens 7, by which the beams are focused on a recording surface **S** of a recording medium 18 through optical elements including a deflection mirror 8, a beam directing device 11 and a concave mirror 15.

The deflection mirror 8 comprises a rectangular mirror and is controlled by a galvanometer 10 coaxially mounted on a drive shaft thereof. A pulse encoder 9 is also mounted on the drive shaft, which is used for outputting clock pulses for use in reading out image signals from a memory. The laser beams **B₇** impinging upon the deflection mirror 8 are deflected to the concave mirror 15 and they traverse the reflecting surface of the concave mirror through the beam directing device 11.

The beam directing device 11 comprises a pair of triangular prisms having a thin metal film on a border plane therebetween, which allows only the laser beams **B₈** to transmit therethrough. The beams **B₉** reflected from the concave mirror 15 are directed by the thin metal film of the directing device 11 to the recording surface **S** of the recording medium 18. The recording medium 18 is fed in a direction **A** at a predetermined velocity, while the laser beams scan the recording surface **S** in a direction perpendicular to the direction **A**.

In this embodiment the flying spot scanning apparatus is so arranged that an effective scanning length be approximately 1000 mm, and that the diameter of the recording spots on the recording surface be 5.5 µm at half-width power.

The source of the laser beam 1 comprises e.g. an Ar-laser tube, from which Ar-laser of a wave length of 488 nm is emitted.

The OEIC 3 comprises an assembly of both an optical waveguide device for dividing a laser beam into a plurality of (e.g. twenty-one) beams and an optical modulator provided at the exit of the waveguide device for individually modulating the respective laser beams in response to image signals.

The OEIC 3 may, of course, be replaced with a conventional optical beam splitter and an optical modulator which are separately installed.

The collimater lens 6 is positioned, by a distance corresponding to the focal length of the collimater lens, away from the exit of the OEIC 3, so that the respective twenty-one beams are collimated to enter the incident surface of the focusing lens 7, whereby the respective laser beams **B₆** emerged therefrom are overlapped each other on the incident surface of the focusing lens 7.

The focusing lens 7 comprises a so-called objective lens which makes parallel incident rays focus upon a point, which comprises a single optical unit including two lenses. The focal length and effective aperture of the focusing lens 7 is designed so that the diameter of the respective laser beams comes into 5.5 µm at half-width power on the recording surface **S**. The lens data thereof are listed hereinbelow.

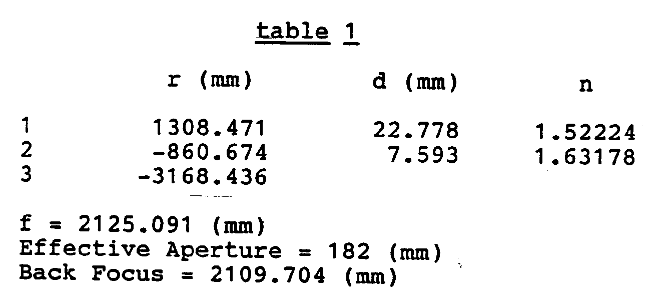

The intensity of the respective laser beams **B₆** represents a normal distribution on the incident surface of the focusing lens 7, while the diameter of the respective beams **B₇** emerged therefrom is defined to 182 mm, and thus the peripheral intensity of the respective beams will come into e⁻² times (i.e. 13 %) of that at the center thereof.

The field lens 4 is provided for adjusting the laser beams so that the respective principal rays of the laser beams **B₇** be consistent with each other at a point on the rotating axis **Z** of the deflection mirror 8, whereby the height of the deflection mirror 8 can be lowered efficiently.

The angles formed by respective adjacent principal rays of the beams **B₆** are approximately the same (i.e. they are approximately 0.63 seconds), and on this condition the twenty-one recording spots of 5.5 µm in diameter are aligned at intervals of 5.5 µm in the direction of the arrow **A** on the recording plane **S**. In this embodiment the rotating axis **Z** of the deflection mirror 8 is positioned at a distance of 227.782 mm from the exit surface of the focusing lens 7.

The deflection mirror 8 is also arranged so that the rotating axis **Z** thereof is positioned approximately at the focal point of the concave mirror 15. The deflection mirror 8 is reciprocatingly rotated by the galvanometer 10 up to a predetermined rotation angle **ϑ₁**, by which the laser beams **B₇** are deflected to traverse the reflecting surface of the concave mirror 15.

In this embodiment the deflecting surface of the mirror 8 is designed to be 220 mm in width and 180 mm in height, and its effective rotation angle **ϑ₁** is adjusted to be ±9 degrees, thence the scanning angle **ϑ₂** of the beams deflected by the deflection mirror 8 comes into ±18 degrees.

The concave mirror 15 comprises a second-surface spherical mirror, which includes an optical glass plate forming a first-surface of the mirror and an aliminized or silvered reflecting surface coated on the back surface thereof. By way of compactness, the concave mirror 15 is formed into a spherical band extending in the direction of scanning. Conditions of the concave mirror 15 are listed hereinbelow.
The radius **r₁** of the first-surface **M₁**: -3626.372 mm
The radius **r₂** of the second-surface **M₂**: -3807.674 mm
The distance between the first- and second-surfaces at the center thereof: 40 mm
The refractive index of the glass plate: 1.52224
The focal length of the concave mirror 15: 1936.057 mm
The ratio of **r₁** to **r₂** comes into 0.952, as can be understood from the above conditions.

In this embodiment the deflection mirror 8 is positioned at a distance of 1512.336 mm from the center of the first-surface of the concave mirror. The distance **V** given by subtracting the distance between the focusing lens 7 and the deflection mirror 8 from the back focus of the focusing lens 7, comes into 1881.922 mm, thence the focal length **f**_{**M**} can be expressed by:${\text{f}}_{\text{M}} \text{= 1.03} \text{V}$

The ratio of **f**_{**M**} to **V** comes into 1.03, and the ratio of the distance **b** between the deflection mirror and the concave mirror to the distance **V**, comes into 0.795.

In such a case where the distance **V** is approximately equal to the focal length **f**_{**M**} of the concave mirror 15, an image surface formed by the scanning spots will come into flat.

As can be understood, the glass plate of the second-surface mirror 15 functions as a thick meniscus lens having a considerably long focal length, which eliminates coma and astigmatism caused by the inconsistency between the radius center of the concave reflecting surface **M₂** and the rotating axis **Z** of the deflection mirror 8.

The beam directing device 11 is disposed between the deflection mirror 8 and the concave mirror 15, which allows only the beams **B₈** to transmit therethrough and directs the beams **B₉** to the recording surface. In this embodiment the beam directing device 11 is formed into a square pole, extending in the scanning direction, formed by a pair of triangular prisms cemented each other, which has a thickness of 45 mm in both the horizontal and vertical directions and whose refractive index is 1.52224. The beam directing device is positioned so that the exit surface of the beams **B₈** be at a distance of 47.953 mm from the center of the first surface **M₁** of the concave mirror, and that the exit surface of the beams **B₉** be at a distance of 199.042 mm from the recording surface (i.e. image surface) **S**.

As arranged is the flying spot scanning apparatus as mentioned above, in accordance with the rotating angle **ϑ₁** of the deflection mirror 8 (i.e. ±9 degrees), the effective scanning length will come into 1000 mm on the image plane **S**, and the diameter of the recording spots will come into 5.5 µm at half-width power.

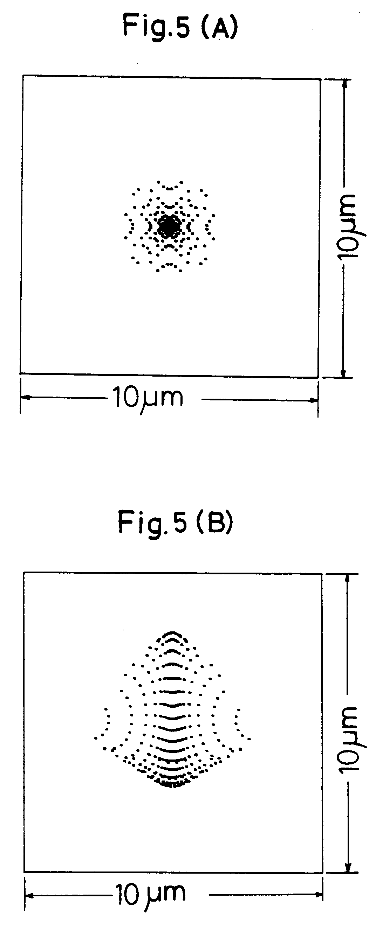

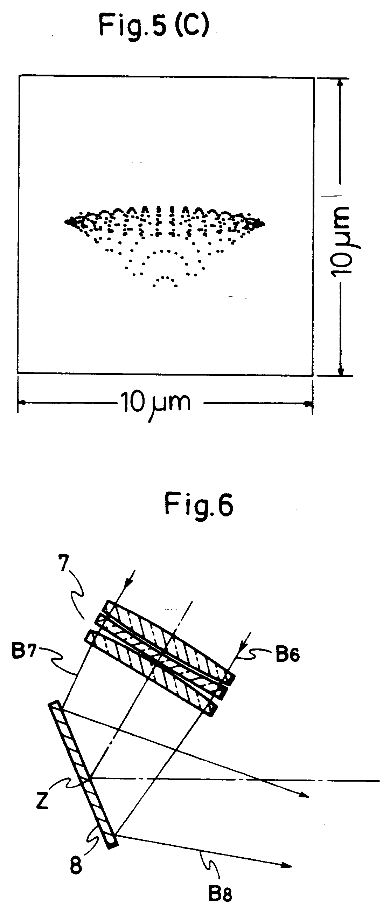

Figures 5-(A) to 5-(C) respectively show a spot diagram, on the image plane, of the 21th beam among the row of twenty-one beams, which are in a case where the image height is of 0 mm, 350 mm and 500 mm, respectively. The frame size of these diagrams is of 10 µm square, from which it will be apparently understood that the lateral abberation of the recording spot falls within approximately ±4 µm at most.

According to the embodiment as mentioned above, the Strehl definition can attain more than 0.90 on every scanning spot aligned on the recording surface. Interval variations between respective adjacent scanning spots, which are aligned in the direction **A**, are no more than 2.2 % (i.e. 0.12 µm) even at the image height of 500 mm.

### SECOND EMBODIMENT

Referring to Figures 1, 6 and 7, in this embodiment the basic structure of the system is substantially the same as shown in the first embodiment, except the beam directing device 11. Respective optical elements are so designated that the effective scanning length be 420 mm, and that the diameter of the scanning spots be 3 µm at half-width power.

The focusing lens 7 comprises a single optical unit including three lenses, whose lens data are shown hereinbelow.

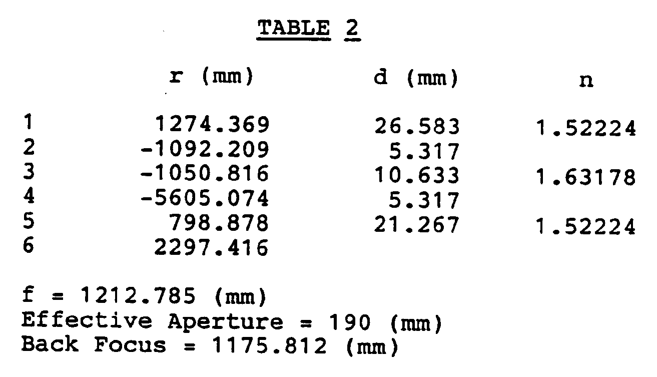

The deflection mirror 8 is disposed at a distance of 167 mm from the focusing lens 7 and of 811.723 mm from the concave mirror 15, so that the distance **V** given by subtracting the distance between the focusing lens and the deflection mirror 8 from the back focus of the focusing lens 7 comes into 1008.812 mm. The rotating angle **ϑ₁** is designed to be ±7 degrees in this embodiment.

The concave mirror 15 comprises a second-surface mirror similar to one in the first embodiment, conditions of which are listed hereinbelow.
The radius **r₁** of the first-surface **M₁**: -1995.230 mm
The radius **r₂** of the second-surface **M₂**: - 2019.7780 mm
The distance between the first- and second-surfaces at the center thereof: 30 mm
The refractive index of the glass plate: 1.52224
The focal length of the concave mirror 15: 1003.275 mm

The ratio of **r₁** to **r₂** comes into 0.988, as can be understood from the above conditions.

From the aforementioned conditions, it will be understood that the focal length **f**_{**M**} can be expressed by:${\text{f}}_{\text{M}} \text{= 0.995} \text{V}$

The ratio of **f**_{**M**} to **V** comes into 0.995, and the ratio of the distance **b** between the deflection mirror and the concave mirror to **V** comes into 0.81.

Furthermore, in this embodiment a so-called half-mirror made of a thin film is employed instead of the beam directing device 11, which functions substantially in the same manner as the beam directing device 11 employed in the first embodiment. The half-mirror is positioned at a distance of 50 mm from the concave mirror and of 81.188 mm from the recording surface **S**.

In this embodiment, in accordance with the rotating angle **ϑ₁** = ±7 degrees, the effective scanning length comes into 420 mm on the recording surface **S**, and the diameter of the recording spots comes into 3 µm at half-width power thereon.

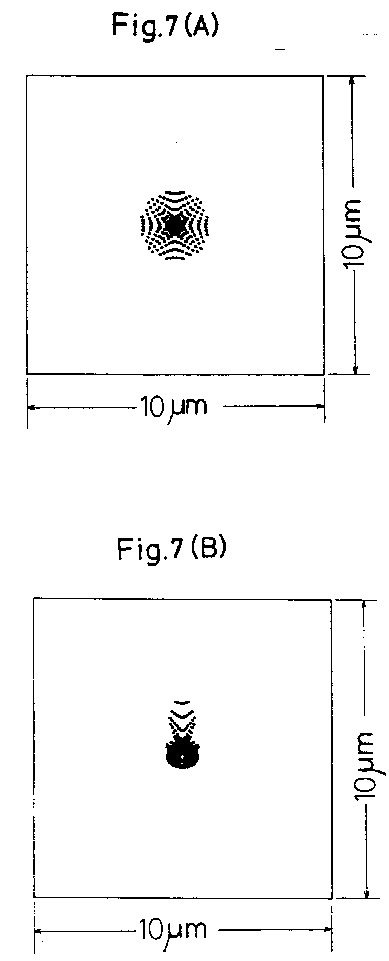

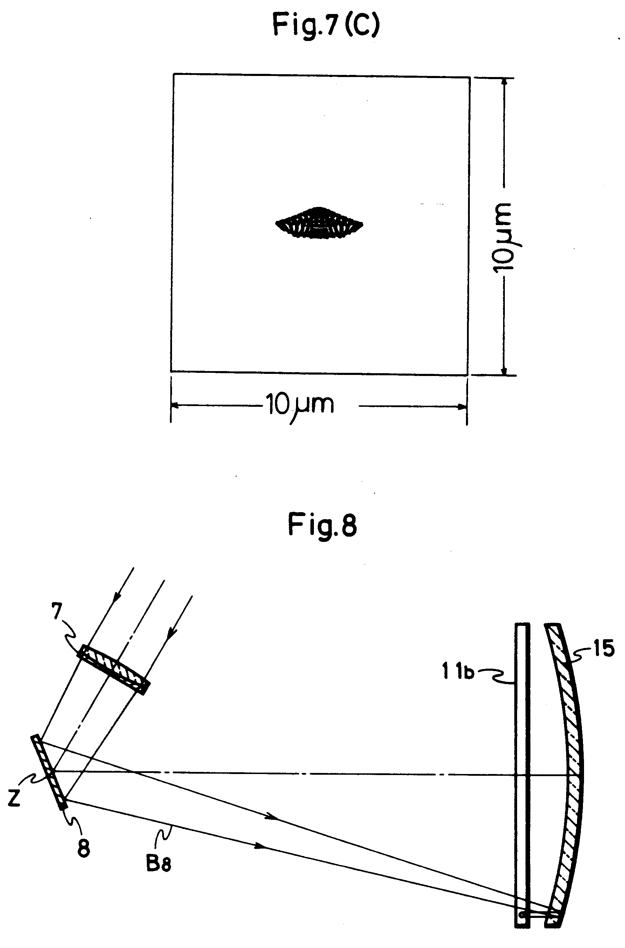

Figures 7-(A) to 7-(C) respectively show a spot diagram, on the image plane, of the 21th beam among the row of twenty-one beams, which are in a case where the image height is of 0 mm, 147 mm and 210 mm, respectively. The frame size of these diagrams is of 10 µm square, from which it will be apparently understood that the lateral abberation of the recording spot falls within approximately ±2 µm at most.

The Strehl definition can attain more than 0.96 on every scanning spot aligned on the image plane. Interval variations between respective adjacent scanning spots, which are aligned in the direction **A**, are no more than 1.4 % even at the image height of 210 mm.

### THIRD EMBODIMENT

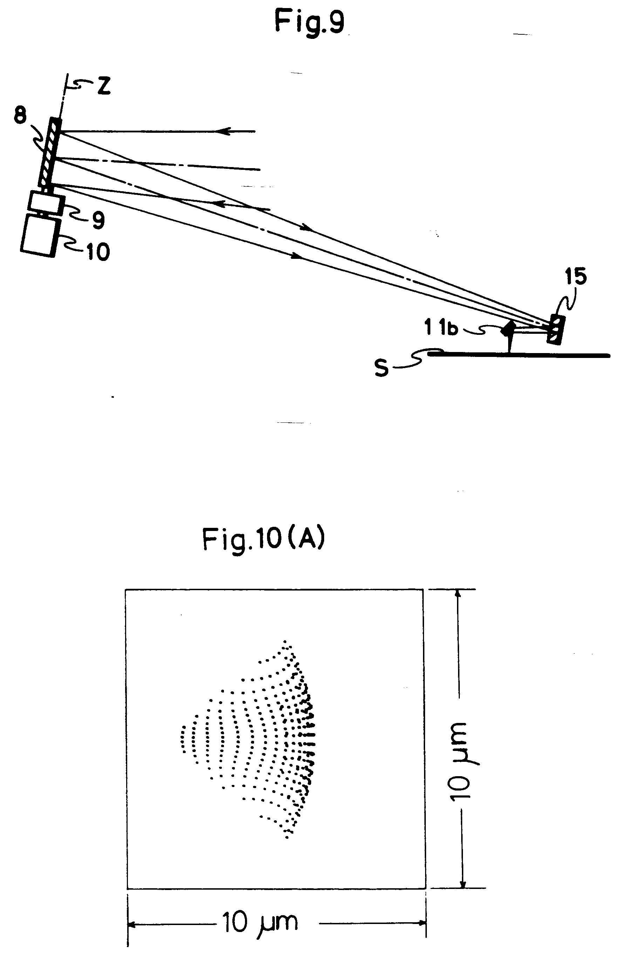

Referring to Figures 1, 8 and 9, in this embodiment the basic structure of the system is also substantially the same as shown in the first and second embodiments, except the beam directing device 11 or the half-mirror. The laser beams **B₈** deflected by the deflection mirror 8 is directed directly to the concave mirror 15 by eliminating the beam directing device 11 in the first embodiment and the half-mirror in the second embodiment, whereby the intensity of the respective beams is secured not to be reduced. As can be clearly seen in Figure 9, the laser beams **B₈** are somewhat inclined to strike the concave mirror 15.

Respective optical elements are so designed that the effective scanning length be 560 mm, and that the diameter of the scanning spots be 5.6 µm at half-width power.

The focusing lens 7 comprises a single optical unit including two lenses, whose lens data are shown hereinbelow.

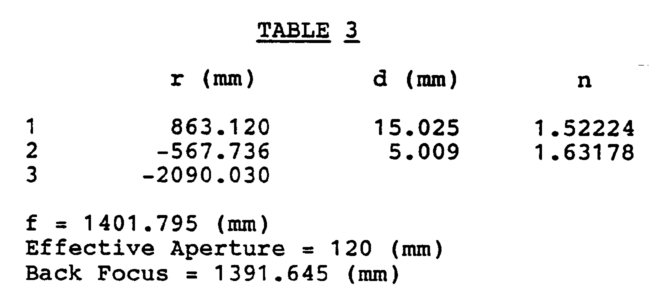

The deflection mirror 8 is positioned at a distance of 225 mm from the focusing lens and of 990.845 mm from the concave mirror 15, so that the distance **V** given by subtracting the distance between the focusing lens and the deflection mirror 8 from the back focus of the focusing lens 7, comes into 1166.645 mm. The rotating axis of the deflection mirror 8 is inclined by 8 degrees relative to a vertical axis, whose rotating angle **ϑ₁** is designed to be ±8 degrees.

The concave mirror 15 comprises a second-surface mirror similar to ones in the first and second embodiments, conditions of which are listed hereinbelow.
The radius **r₁** of the first-surface **M₁**: -2291.604 mm
The radius **r₂** of the second-surface **M₂**: -2311.511 mm
The distance between the first- and second-surfaces at the center thereof: 20 mm
The refractive index of the glass plate: 1.52224
The focal length of the concave mirror 15: 1152.281 mm

The ratio of **r₁** to **r₂** comes into 0.991, as can be understood from the above conditions.

From the aforementioned conditions, it will be understood that the focal length **f**_{**M**} can be expressed by:${\text{f}}_{\text{M}} \text{= 0.988} \text{V}$

The ratio of **f**_{**M**} to **V** comes into 0.988, and the ratio of the distance **b** between the deflection mirror and the concave mirror to **V** comes into 0.85.

Because of the inclination of the beams **B₈**, the optical axis of the concave mirror 15 (i.e. normal axis of the reflecting surfaces of **M₁** and **M₂**) is inclined by 7.373 degrees relative to the optical axis along the beams **B₇**.

In this embodiment a total reflection mirror 11b is installed and is positioned at a distance of 80 mm from the concave mirror 15 and of 50 mm from the recording surface **S**. The reflection mirror 11b is so arranged that the normal axis thereof forms an angle of 45.18 degrees relative to the recording surface.

In this embodiment, in accordance with the rotating angle **ϑ₁** = ±8 degrees, the effective scanning length comes into 560 mm on the recording surface **S**, and the diameter of the recording spots comes into 5.6 µm at half-width power thereon.

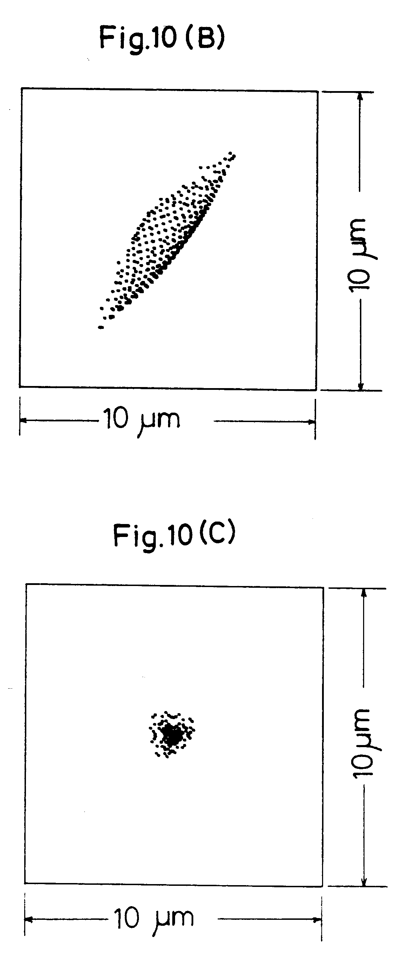

Figures 10-(A) to 10-(C) respectively show a spot diagram, on the image plane, of the 21th beam among the row of twenty-one beams, which are in a case where the image height is of 0 mm, 200 mm and 280 mm, respectively. The frame size of these diagrams is of 10 µm square, from which it will be apparently understood that the lateral abberation of the recording spot falls within approximately ±3.5 µm at most.

According to this embodiment, the Strehl definition can attain more than 0,90 on every scanning spot aligned on the recording surface. Interval variations between respective adjacent scanning spots, which are aligned in the direction **A**, are no more than 1.9% even at the image height of 280 mm.

### FOURTH EMBODIMENT

Referring to Figures 1, 11 and 12, in this embodiment the basic structure of the system is also substantially the same as shown in the precedent embodiments, except the concave mirror 15. A meniscus lens having a considerably long focal length 15a and a concave first-surface mirror 15b are installed instead of the concave second-surface mirror 15 employed in the precedent embodiments.

In this embodiment respective optical elements are so designed that the effective scanning length be 550 mm, and that the diameter of the scanning spots be 8.4 µm at half-width power.

The focusing lens 7 comprises a single optical unit including two lenses, whose lens data are show hereinbelow.

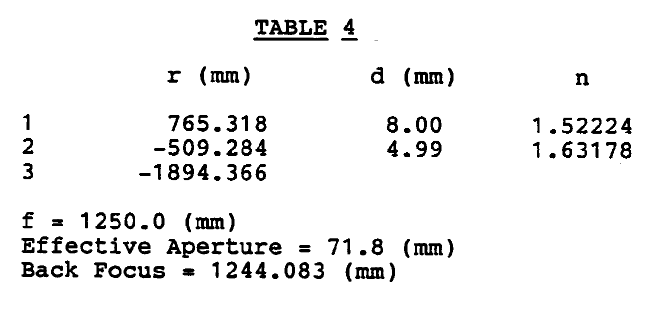

The deflection mirror 8 is positioned at a distance of 144.083 mm from the focusing lens 7 and of 663.320 mm from the meniscus lens 15a, so that the distance **V** given by subtracting the distance between the focusing lens 7 and deflection mirror 8 from the back focus of the focusing lens, comes into 1100 mm. The rotating angle **ϑ₁** is designed to be ±8 degrees.

The meniscus lens 15a is positioned at a distance of 274.396 mm from the concave mirror 15b, whose concave surface is directed toward the deflection mirror 8. By way of compactness, the meniscus lens 15a is formed into a spherical band similarly to the precedent embodiments. Conditions of the meniscus lens 15a is shown hereinbelow.

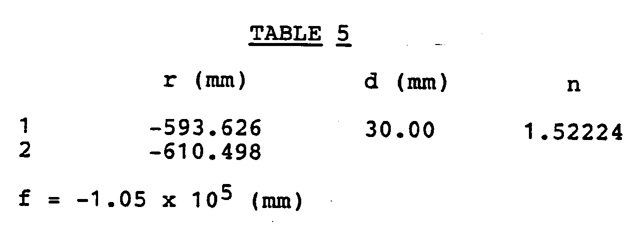

The ratio of the distance **V** to the focal length **f**_{**N**} of the meniscus lens comes into -0.01.

The concave mirror 15b comprises a parabolic first-surface mirror with a thin metal coating on the front incident surface of the mirror, whose focal length **f**_{**M**} is 1096.694 mm. The focal length **f**_{**M**} can also be expressed by:${\text{f}}_{\text{M}} \text{= 0.997} \text{V}$

The ratio of **f**_{**M**} to **V** comes into 0.997, and the ratio of the distance **b** between the deflection mirror and the concave mirror to **V** comes into 0.88.

The concave mirror 15b is disposed at a distance of 957.424 mm from the deflection mirror 8.

A half-mirror 11a is installed between the meniscus lens 15a and the concave mirror 15b for transmitting only the beams **B₈** therethrough and directing the beams reflected by the concave mirror 15b to the recording surface **S**. The half-mirror 11a is made of a thin film as employed in the second embodiment, which is positioned at a distance of 50 mm from the concave mirror 15b and of 89.225 mm from the recording surface.

In this embodiment undesirable abberations, particularly coma and astigmatism caused by using the parabolic mirror 15b, can effectively be corrected by means of the meniscus lens 15a.

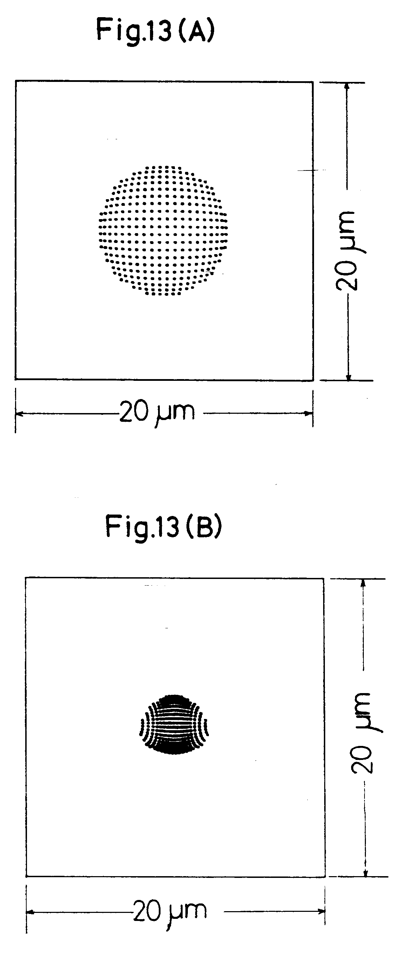

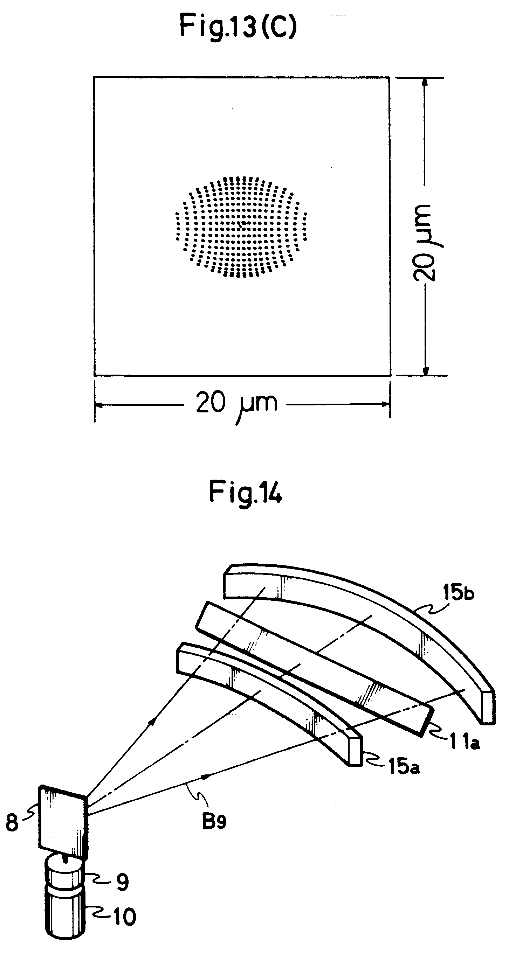

Figures 13-(A) to 13-(C) respectively show a spot diagram, on the image plane, of the 21th beam among the row of twenty-one beams, which are in a case where the image height is of 0 mm, 200 mm and 275 mm, respectively. The frame size of these diagrams is of 20 µm square, from which it will be apparently be understood that the lateral abberation of the recording spot falls within approximately ±5 µm at most.

The Strehl definition can attain more than 0.92 on every scanning spots aligned on the image plane. Interval variations between respective adjacent scanning spots, which are aligned in the direction **A**, are no more than 2.0 % even at the image height of 275 mm.

### FIFTH EMBODIMENT

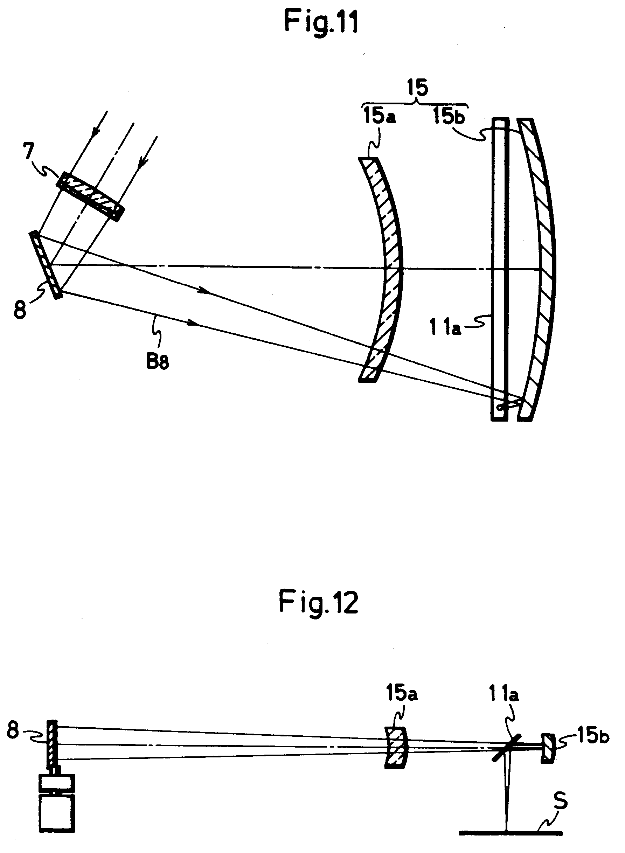

In this embodiment the basic structure of the system is also substantially the same as in the fourth embodiment. However, both the meniscus lens 15a and the concave mirror 15b shown in Figures 11 and 12 are formed into a parabolically-bent shape, as typically shown in Figure 14. In this case the word "parabolically-bent shape" depicts that a band of a plane mirror is bent so as to form a parabolic curve in a plan view. In other words, it has a curvature in the horizontal direction and has no curvature in the vertical direction.

In this embodiment respective optical elements are so designed that the effective scanning length be 560 mm, and that the diameter of the scanning spots be 9.2 µm at half-width power.

Both the focusing lens 7 and the deflection mirror 8 are the same designs and are positioned at the same positions as shown in the fourth embodiment. The distance **V** given by subtracting the distance between the focusing lens and the deflection mirror from the back focus of the focusing lens, comes into 1100 mm.

The meniscus lens 15a of the spherically-bent shape is positioned at a distance of 654.305 mm from the deflection mirror 8 and of 335.742 mm from the parabolically-bent shaped concave mirror, whose concave incident surface is directed toward the deflection mirror 8. Hereinbelow is shown the conditions of the meniscus lens 15a.

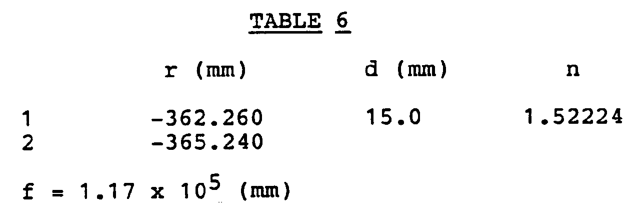

The ratio of the distance **V** to the focal length **f**_{**N**} comes into less than 0.01.

As mentioned above, the concave mirror 15b is formed into a parabolically-bent shape, whose focal length **f**_{**M**} is designed to be 1000 mm, thence this can be expressed by:${\text{f}}_{\text{M}} \text{= 0.91} \text{V}$

The ratio of **f**_{**M**} to **V** comes into 0.91, and the ratio of the distance **b** between the deflection mirror and the concave mirror to **V** comes into 0.91.

The half-mirror 11a is positioned at a distance of 50 mm from the concave mirror 15b and of 50 mm from the recording surface **S**.

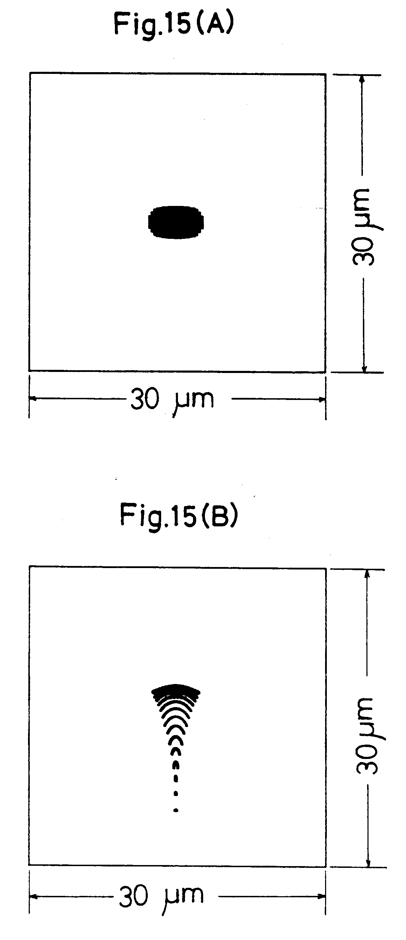

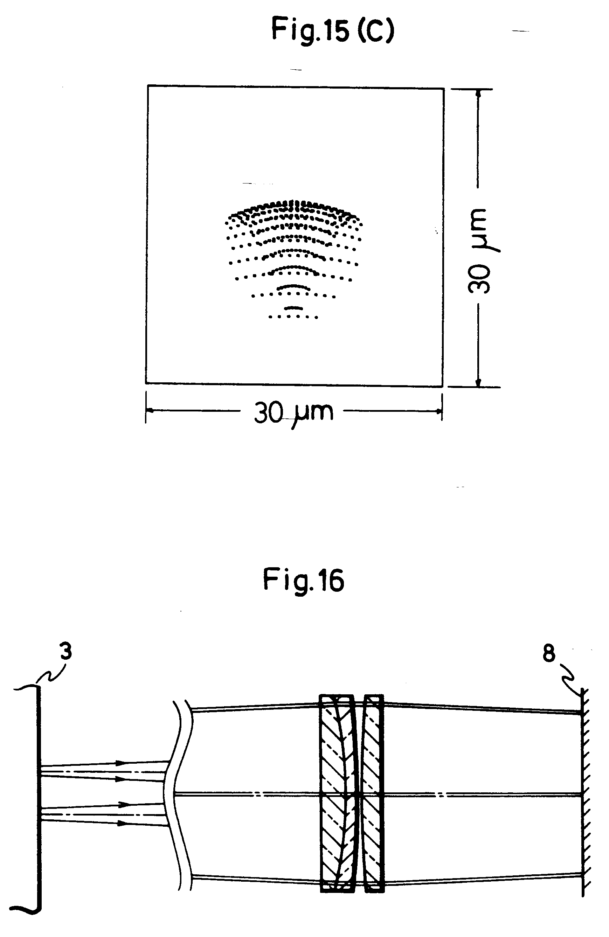

Figures 15-(A) to 15-(C) respectively show a spot diagram, on the image plane, of the 21th beam among the row of twenty-one beams, which are in a case where the image height is of 0 mm, 200 mm and 280 mm, respectively. The frame size of these diagrams is of 30 µm square, from which it will be apparently be understood that the lateral abberation of the recording spot falls within approximately ±7 µm at most.

The Strehl definition can attain more than 0.90 on every scanning spots aligned on the image plane. Interval variations between respective adjacent scanning spots, which are aligned in the direction **A**, are no more than 0.026 % even at the image height of 275 mm. In comparison with the fourth embodiment, these will be apparently more excellent and ideal than those in the fourth embodiment. The reason of excellence in this embodiment is that the optical length between the deflection mirror and the recording surface is kept approximately constant independently of the rotating angle of the deflection mirror by using the parabolically-bent shaped mirror.

In view of the aforementioned results, it will be apparently understood that the flying spot scanning apparatus according to the present invention has excellent optical characteristics and is approximately ideal for recording an image on a recording medium.

In the aforementioned embodiments it will be apparent that the deflection mirror may be positioned at a position within the range of:$\text{0.9 <} {\text{f}}_{\text{M}} \text{/} \text{V} \text{< 1.05}$
where **f**_{**M**} is a focal length of the concave mirror, and **V** is a distance given by subtracting the distance between the focusing lens and the deflection mirror from the back focal length of the focusing lens.

The concave mirror may be disposed at a position within the range of:$\text{0.75 <} \text{b} \text{/} \text{V} \text{< 0.95}$
where **b** is a distance between the deflection mirror and the concave mirror.

In a case where the concave mirror comprises a second-surface mirror, the concave mirror may be designed so that the following formula be satisfied.$\text{0.95 <} \text{r₁} \text{/} \text{r₂} \text{< 1.0}$
where **r₁** is a radius of the first surface of the concave mirror, and **r₂** is a radius of the second surface thereof.

In a case where the concave mirror comprises a first-surface mirror, a meniscus lens to be disposed optically before the concave mirror may be designed so that the following formula be satisfied.$\text{|} \text{V} \text{/} {\text{f}}_{\text{N}} \text{| < 0.02}$
where **V** is a distance given by subtracting a distance between the focusing lens and the deflection mirror from the back focal length of the focusing lens, and **f**_{**N**} is a focal length of the meniscus lens.

In the precedent embodiments the laser beams **B₆** received by the focusing lens 7 are collimated by the collimater lens 6. However, it is not necessary to employ such collimater lens. The following is an embodiment where such collimater lens is not employed.

### SIXTH EMBODIMENT

Referring to Figure 1 and 16, in this embodiment the basic structure of the system is substantially the same as shown in the precedent embodiments, except the field lens 4 and the collimater lens 6.

By way of easiness of explanation, all optical elements employed in this embodiment are assumed to use ones shown in the first embodiment, though it is apparently applicable to incorporate this embodiment to any one of the precedent embodiments.

The focusing lens 7 comprises a single optical unit including three lenses, whose lens data are shown hereinbelow.

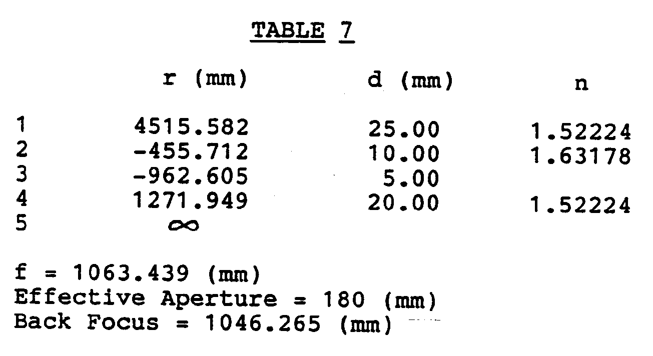

The focusing lens 7 is positioned at a distance of 2103.302 mm from the exit of the modulator 3. Assuming that a beam waist of the respective laser beams is formed at the exit of the modulator 3 and that the diameter of the beam waist is 5.5 µm at half-width power, another beam waist of 5.5 µm in diameter at half-width power will be formed, by the focusing lens, at a position of 2109.704 mm away from the exit surface of the focusing lens. It will be apparently understood that the position where the beam waist is formed by the focusing lens corresponds to the back focal length of the focusing lens 7 employed in the first embodiment. Accordingly, recording can be made substantially in the same manner as in the first embodiment, by disposing the deflection mirror 8 at a position of 227.782 mm away from the focusing lens.

## Claims

1. An optical system for a flying spot scanning apparatus, comprising:
a light source for emitting a light beam;
optical modulator means for modulating said light beam;
a focusing lens for forming a recording spot of the light beam on an optical axis thereof;
deflection means disposed optically between the focusing lens and a recording surface for reciprocatingly deflecting the light beam to move the recording spot on the recording surface; and
reflection means, disposed optically between the deflection means and the recording surface, having a focal length f_{M}, the reflection means extending along a direction where the recording spot runs thereon, characterized in
that the deflection means is disposed at a position where a distance V given by subtracting the distance between the focusing lens and the deflection means from the distance, along the optical path of the light beam, between the focusing lens and the recording spot formed by the focusing lens on the recording surface is approximately equal to the focal length f_{M},
that the reflection means comprises a concave optical glass plate having a front surface and a back surface, and a concave reflection surface disposed optically behind the concave optical glass plate, the radius r1 of the front surface being approximately equal to the radius r2 of the back surface, and
that the reflection means is disposed at such a position that the following formula is satisfied:$\text{0.75 < b/V < 0.95}$ where b is the distance between the deflection means and the concave reflection surface.

2. An optical system as set forth in claim 1, wherein the deflection means is positioned at a position where the following formula is satisfied:${\text{0.9 < f}}_{\text{M}} \text{/V < 1.05.}$

3. An optical system as set forth in claim 2, wherein the reflection means is a second-surface mirror comprising the concave optical glass plate whose back surface being coated by metal film.

4. An optical system as set forth in claim 3, wherein the concave optical glass plate is so designated that the following formula is satisfied:$\text{0.95 < r1/r2 < 1.0.}$

5. An optical system as set forth in claim 2, wherein the reflection means comprises a meniscus lens having a focal length f_{N}, and a first-surface mirror having a concave reflection surface.

6. An optical system as set forth in claim 5, wherein the meniscus lens is so designated that the following formula is satisfied:${\text{V/f}}_{\text{N}} \text{< 0.02.}$

7. An optical system as set forth in claim 4 or 6, wherein the reflection means is formed into a spherical band extending along a direction where the light beam is deflected by the deflection means.

8. An optical system as set forth in claim 4 or 6, wherein the reflection means is formed into a parabolic band extending along a direction where the light beam is deflected by the deflection means.

9. An optical system as set forth in claim 4 or 6, wherein the reflection means is formed into a parabolically-bent band extending along a direction where the light beam is deflected by the deflection means.

## Patentansprüche

1. Optisches System für ein Lichtpunktabtastgerät, das umfaßt:
eine Lichtquelle zum Emittieren eines Lichtstrahles;
eine optische Modulatoreinrichtung zum Modulieren des Lichtstrahles;
eine Fokussierlinse zum Bilden eines Aufzeichnungspunktes des Lichtstrahles auf ihrer optischen Achse;
eine Ablenkeinrichtung, die optisch zwischen der Fokussierlinse und einer Aufzeichnungsoberfläche zum hin- und herpendelnden Ablenken des Lichtstrahles angeordnet ist, um den Aufzeichnungspunkt auf der Aufzeichnungsoberfläche zu bewegen; und
eine Reflexionseinrichtung, die optisch zwischen der Ablenkeinrichtung und der Aufzeichnungsoberfläche angeordnet ist und die eine Brennweite f_{M} aufweist, wobei die Reflexionseinrichtung sich entlang einer Richtung erstreckt, in der der Aufzeichnungspunkt läuft,
dadurch gekennzeichnet, daß
daß die Ablenkeinrichtung an einer Position angeordnet ist, bei der ein Abstand V, der durch Subtrahieren des Abstandes zwischen der Fokussierlinse und der Ablenkeinrichtung von dem Abstand, entlang des optischen Pfades des Lichtstrahles, zwischen der Fokussierlinse und des Aufzeichnungspunktes, der durch die Fokussierlinse auf der Aufzeichnungsoberfläche gebildet wird, gegeben ist, ungefähr gleich der Brennweite f_{M} ist,
daß die Reflexionseinrichtung eine konkave optische Glasplatte, die eine vordere Oberfläche und eine hintere Oberfläche hat, und eine konkave Reflexionsoberfläche, die optisch hinter der konkaven optischen Glasplatte angeordnet ist, aufweist, wobei der Radius r1 der vorderen Oberfläche ungefähr gleich dem Radius r2 der hinteren Oberfläche ist, und
die Reflexionseinrichtung an solch einer Position angeordnet ist, daß die folgende Formel erfüllt ist:$\text{0,75 < b/V < 0,95}$ wobei b der Abstand zwischen der Ablenkeinrichtung und der konkaven Reflexionsoberfläche ist.

2. Optisches System nach Anspruch 1, bei dem die Ablenkeinrichtung an einer Stelle positioniert ist, für die die folgende Formel erfüllt ist:${\text{0,9 < f}}_{\text{M}} \text{/V < 1,05.}$

3. Optisches System nach Anspruch 2, bei dem die Reflexionseinrichtung ein Spiegel mit zusätzlicher Rückseitenverspiegelung ist, der die konkave optische Glasplatte umfaßt, deren hintere Oberfläche mit einem Metallfilm vergütet ist.

4. Optisches System nach Anspruch 3, bei dem die konkave optische Glasplatte so gestaltet ist, daß die folgende Formel erfüllt ist:$\text{0,95 < r1/r2 < 1,0.}$

5. Optisches System nach Anspruch 2, bei dem die Reflexionseinrichtung eine Meniskuslinse mit einer Brennweite f_{N} und einen Spiegel mit zusätzlicher Vorderseitenverspiegelung mit einer konkaven Reflexionsoberfläche aufweist.

6. Optisches System nach Anspruch 5, bei dem die Meniskuslinse so gestaltet ist, daß die folgende Formel erfüllt ist:${\text{V/f}}_{\text{N}} \text{< 0,02.}$

7. Optisches System nach Anspruch 4 oder 6, bei dem die Reflexionseinrichtung als ein sphärisches Band ausgebildet ist, das sich entlang einer Richtung erstreckt, in die der Lichtstrahl durch die Ablenkeinrichtung abgelenkt wird.

8. Optisches System nach Anspruch 4 oder 6, bei dem die Reflexionseinrichtung als ein parabolisches Band ausgebildet ist, das sich entlang einer Richtung erstreckt, in die der Lichtstrahl durch die Ablenkeinrichtung abgelenkt wird.

9. Optisches System nach Anspruch 4 oder 6, bei dem die Reflexionseinrichtung als ein parabolisch gekrümmtes Band ausgebildet ist, das sich entlang einer Richtung erstreckt, in die der Lichtstrahl durch die Ablenkeinrichtung abgelenkt wird.

## Revendications

1. Système optique pour dispositif d'analyse à point mobile comportant :
une source de lumière destinée à émettre un faisceau lumineux,
des moyens formant modulateur optique destinés à moduler ledit faisceau lumineux,
une lentille de focalisation destinée à former un point d'enregistrement à partir du faisceau lumineux sur un axe optique associé,
des moyens de déviation disposés optiquement entre la lentille de focalisation et une surface d'enregistrement pour dévier alternativement le faisceau lumineux afin de déplacer le point d'enregistrement sur la surface d'enregistrement, et
des moyens de réflexion, disposés optiquement entre les moyens de déviation et la surface d'enregistrement, ayant une distance focale f_{M}, les moyens de réflexion s'étendant le long d'une direction dans laquelle le point d'enregistrement se déplace, caractérisé en ce que
les moyens de déviation sont disposés au niveau d'une position dans laquelle une distance V obtenue en soustrayant la distance existant entre la lentille de focalisation et les moyens de déviation de la distance existant, le long du trajet optique du faisceau lumineux, entre la lentille de focalisation et le point d'enregistrement formé par la lentille de focalisation sur la surface d'enregistrement est à peu près égale à la distance focale f_{M},
les moyens de réflexion comportent une plaque en verre optique concave, ayant une surface avant et une surface arrière, et une surface de réflexion concave disposée optiquement derrière la plaque en verre optique concave, le rayon r₁ de la surface avant étant à peu près égal au rayon r₂ de la surface arrière, et
les moyens de réflexion sont disposés au niveau d'une position telle que la formule suivante est satisfaite :$\text{0.75 < b/V < 0.95}$ où b est la distance existant entre les moyens de déviation et la surface réfléchissante concave.

2. Système optique selon la revendication 1, dans lequel les moyens de déviation sont positionnés au niveau d'une position dans laquelle la formule suivante est satisfaite :${\text{0.9 < f}}_{\text{M}} \text{/V < 1.05.}$

3. Système optique selon la revendication 2 dans lequel les moyens de réflexion sont un miroir à seconde surface réfléchissante comportant la plaque en verre optique concave dont la surface arrière est enduite d'un film métallique.

4. Système optique selon la revendication 3, dans lequel la plaque en verre optique concave est conçue de telle sorte que la formule suivante soit satisfaite :$\text{0.95 < r₁/r₂ < 1.0.}$

5. Système optique selon la revendication 2, dans lequel les moyens de réflexion comportent une lentille-ménisque ayant une distance focale f_{N}, et un miroir à première surface réfléchissante ayant une surface réfléchissante concave.

6. Système optique selon la revendication 5, dans lequel la lentille-ménisque est conçue de telle sorte que la formule suivante soit satisfaite :${\text{V/f}}_{\text{N}} \text{< 0.02.}$

7. Système optique selon la revendication 4 ou 6, dans lequel les moyens de réflexion ont la forme d'une bande sphérique s'étendant le long d'une direction dans laquelle le faisceau lumineux est dévié par les moyens de déviation.

8. Système optique selon la revendication 4 ou 6, dans lequel les moyens de réflexion ont la forme d'une bande parabolique s'étendant le long d'une direction dans laquelle le faisceau lumineux est dévié par les moyens de déviation.

9. Système optique selon la revendication 4 ou 6, dans lequel les moyens de réflexion ont la forme d'une bande incurvée de manière parabolique s'étendant le long d'une direction dans laquelle de le faisceau lumineux est dévié par les moyens de déviation.
